**Europäisches Patentamt**

**European Patent Office**

**Office européen des brevets**

(19)

(11) Numéro de publication : **0 507 678 A2**

# (12) DEMANDE DE BREVET EUROPEEN

(21) Numéro de dépôt : **92400912.9**

(22) Date de dépôt : **01.04.92**

(51) Int. Cl.⁵ : **C04B 35/56, C04B 35/58**

(30) Priorité : **05.04.91 FR 9104167**

(43) Date de publication de la demande :
**07.10.92 Bulletin 92/41**

(84) Etats contractants désignés :
**AT BE CH DE DK ES FR GB GR IT LI LU NL PT SE**

(71) Demandeur : **ELF ATOCHEM S.A.**
**4 & 8, Cours Michelet La Défense 10**
**F-92800 Puteaux (FR)**

(71) Demandeur : **MAX-PLANCK-INSTITUT FÜR METALLFORSCHUNG**
**Heisenbergstrasse 5**
**W-7000 Stuttgart 80 (DE)**

(72) Inventeur : **Riedel, Ralf**
**Kaspartswadstrasse 21**
**W-7022 Leinf.-Echterd. 3 (DE)**
Inventeur : **Passing, Gerd**
**Mühlenstrasse 18**
**W-5632 Wermelskirchen 2 (DE)**
Inventeur : **Brook, Richard John**
**Forststrasse 180**
**W-7000 Stuttgart 1 (DE)**
Inventeur : **Colombier, Christian**
**3 Rue de Sèze**
**F-69006 Lyon (FR)**
Inventeur : **Gonon, Maurice**
**41D, Rue Garibaldi**
**F-69800 Saint-Priest (FR)**
Inventeur : **Fantozzi, Gilbert**
**17, Rue Duquesne**
**F-69330 Meyzieu (FR)**

(74) Mandataire : **Rochet, Michel et al**
**ELF ATOCHEM S.A. Département Propriété Industrielle 4-8, Cours Michelet La Défense 10 - Cedex 42**
**F-92091 Paris-La-Défense (FR)**

(54) **Procédé de préparation de céramiques monolithiques non oxydes à partir de précurseurs organométalliques.**

(57)   L'invention concerne la préparation de céramiques monolithiques non oxydes.
   Ce procédé fait appel à une poudre issue d'un précurseur de céramique infusible, laquelle poudre est mise en forme et pyrolysée.
   Ce procédé permet d'obtenir, à basse température, des céramiques denses, amorphes ou cristallines.

EP 0 507 678 A2

L'invention a pour objet un procédé de préparation de céramiques monolithiques non oxydes à partir de précurseurs organométalliques.

D'une manière générale, les matériaux céramiques non oxydes tels que AlN, B$_4$C, SiC ou Si$_3$N$_4$ sont produits à température élevée (1700 à 2500°C) par frittage sous pression, pressage à chaud ou pressage isostatique à chaud des poudres céramiques appropriées contenant les additifs nécessaires pour améliorer la densification. Cette technique présente plusieurs inconvénients :

– la distribution homogène des additifs dans la poudre servant de matrice est difficile à réaliser : des procédés complexes de broyage ou des méthodes chimiques en phase humide ont été proposées pour améliorer l'homogénéité. Néanmoins, la présence de zones non homogènes ne peut être évitée et il peut en résulter la formation de fissures dans la pièce finale du fait d'un retrait irrégulier de la céramique lors du frittage. De ce fait, la reproductibilité et la fiabilité de cette technique est limitée ;

– la densification de la céramique requiert des températures élevées c'est-à-dire entraîne un coût d'énergie important ;

– après frittage, on obtient des matériaux polycristallins : or, l'interface des grains limite considérablement les propriétés physiques et mécaniques du matériau, notamment à température élevée.

L'invention se propose donc de fournir un nouveau procédé permettant d'obtenir, à basse température, un matériau céramique dense et exempt de fissures et ayant de bonnes propriétés mécaniques, ledit procédé mettant en jeu la conversion thermique de précurseurs organométalliques. Ce procédé permet d'obtenir aussi bien des céramiques amorphes que polycristallines.

L'invention se propose plus précisément de fournir un nouveau procédé de préparation de céramiques non oxydes, permettant d'obtenir des céramiques monolithiques denses, amorphes ou cristallines, à température relativement peu élevée (par exemple, entre 800 et 1100°C), avec ou sans additifs de frittage, lesdites céramiques ne contenant qu'un taux extrêmement faible d'impuretés.

L'invention concerne également de telles céramiques.

L'invention a donc pour objet en premier lieu un procédé de préparation de matériaux céramiques non oxydes monolithiques, caractérisé en ce qu'il comprend les étapes suivantes :

1- Préparation d'une poudre (P) à partir d'un précurseur de céramique infusible (Pi) ;

2- Mise en forme de la poudre (P) ;

3- Pyrolyse de la pièce formée en 2 et obtention du matériau céramique monolithique.

Selon une première variante, la poudre (P) est mise en forme lors de la deuxième étape en mélange avec un précurseur organométallique fusible (Po) liquide dans les conditions de cette mise en forme.

Selon une variante dérivée de la précédente, la pièce résultant de la mise en forme prévue en 2 est soumise avant pyrolyse à des conditions permettant la réticulation du précurseur (Po) en précurseur infusible (Pi).

Selon une autre variante dérivée, la pièce contenant le précurseur réticulé (Pi) comme indiqué ci-avant, est à nouveau imprégnée au moyen d'un précurseur (Po) sous forme liquide.

La première étape du procédé consiste à former une poudre à partir d'un précurseur de céramique infusible (Pi). Ce précurseur peut lui-même résulter de la réticulation d'un précurseur organométallique (Po) initialement fusible ou être obtenu directement sous forme réticulée.

Les précurseurs fusibles peuvent être choisis dans une très large gamme de polymères organométalliques contenant Al, B ou Si, et C ou N ou O ou leurs mélanges dans la chaîne polymérique. A titre d'illustration de ces précurseurs organométalliques (Po), on peut citer notamment :

– les polysilazanes de formule

$$\{RR'SiNH\}_n$$

– les polysilylhydrazines

$$\{RR'SiNHNH\}_n$$

– les polysilanes

$$\{RR'Si\}_n$$

– les polycarbosilanes

$$\{CH_2RR'Si\}_n$$

formules dans lesquelles les symboles R et R' peuvent représenter un atome d'hydrogène, un radical alkyle, alcényle, alcynyle ou aryle pouvant renfermer jusqu'à 12 atomes de carbone. D'une manière préférentielle, dans les formules précitées, les symboles R et R' représentent un atome d'hydrogène, un radical vinyle ou un radical méthyle.

La transformation du précurseur (Po) en polymère infusible (Pi) peut être obtenue de différentes manières et notamment par réticulation chimique, thermique ou physique, la température de réticulation pouvant, selon le cas, aller de la température ambiante à environ 750°C. La réticulation chimique peut notamment être obtenue par l'intermédiaire de substituants réactifs dans la structure polymérique tels que les groupes métal-hydrogène (par exemple SiH), ou -NH ou -vinyle ou -acétylényle.

2

Ainsi qu'il a été indiqué précédemment, on peut aussi partir d'un précurseur présentant dès sa préparation un degré plus ou moins élevé de réticulation, comme c'est le cas, par exemple, avec le polyméthylvinylsilane qui peut être obtenu sous forme déjà réticulée par réaction de méthylvinyldichlorosilane avec Na/K.

Selon une variante de cette première étape et lorsqu'on part d'un précurseur fusible (Po), on peut, avant conversion dudit précurseur (Po) mélanger ledit précurseur avec un additif de frittage (comme proposé dans la demande de brevet allemand 3840773) dans le but d'obtenir des articles totalement denses lors des traitements thermiques ultérieurs se faisant au-dessus de la température de pyrolyse.

La poudre (P) peut être obtenue par broyage du polymère (Pi), éventuellement dans un broyeur contenant des billes de $ZrO_2$. D'une manière générale, la poudre (P) présente une granulométrie comprise entre 0,1 et 500 µm, la granulométrie moyenne pouvant aller de 2 à 100 µm.

La deuxième étape du procédé consiste à former une pièce à partir de la poudre (P) ou d'un mélange comprenant cette poudre (P) et un précurseur (Po).

Cette mise en forme peut se faire par exemple, par pressage isostatique ou uniaxial, en général à froid, ou encore par extrusion ou par moulage par injection. D'une manière générale, on peut ainsi obtenir un article "cru" (green), c'est-à-dire avant pyrolyse ayant une densité relative représentant au moins 65% et de préférence au moins 75% de la densité d'un polymère totalement exempt de toute porosité.

On peut encore réaliser cette mise en forme par le procédé sol-gel à partir de polymères (Pi) dissous dans un solvant organique, par exemple, le tétrahydrofuranne ou le toluène puis gélifiés thermiquement ou chimiquement par exemple, par addition d'ammoniac ou encore physiquement par exemple au moyen de radiation ultraviolette.

D'une manière générale, les pores des pièces obtenues ci-avant ont un diamètre moyen inférieur à 200 nm, la distribution du volume poreux montrant que la plus grande partie des pores présente un diamètre inférieur à 4 nm.

Ainsi qu'il a été indiqué et selon une variante, la mise en forme peut aussi se faire à partir d'un mélange comprenant la poudre de polymère infusible (Pi) et un précurseur (Po).

Ce précurseur (Po) peut être choisi parmi les précurseurs fusibles mentionnés précédemment. Ce précurseur peut être liquide ou solide à température ambiante. Dans ce dernier cas, il est souhaitable que le précurseur (Po) se fluidifie à température modérée, par exemple inférieure à 300°C pour faciliter l'opération de mise en forme et qu'à température de mise en forme -qui, selon le cas, peut donc aller de la température ambiante à une température de l'ordre de 300°C-, il présente une viscosité de préférence inférieure à $10^6$ poises.

La quantité de précurseur (Po) ajouté au précurseur infusible (Pi) peut varier dans de larges limites. Cependant, pour des raisons de facilité de manipulation de la pièce formée à partir du mélange (Pi)+(Po), il est souhaitable que la quantité de (Po) n'excède pas 25% du poids du mélange (Pi)+(Po), étant précisé que cette indication est donnée à titre d'exemple, d'autres paramètres pouvant intervenir comme par exemple, la granulométrie et/ou la surface de la poudre de polymère (Pi).

La pièce résultant de la mise en forme de la poudre (P ou du mélange poudre (P) + précurseur (Po)) peut être directement soumise à la pyrolyse.

On peut aussi faire subir au précurseur (Po) -dans la seconde hypothèse précitée- une réticulation par exemple par chauffage de la pièce entre environ 300C° et environ 750°C.

On peut encore procéder à une réimprégnation de la pièce au moyen d'un précurseur (Po) à l'état liquide dans les conditions de cette réimprégnation.

Dans les divers cas précités, l'étape finale consiste dans une pyrolyse de la pièce.

Cette pyrolyse est généralement conduite sous argon ou azote ou encore sous $NH_3$ si on désire éliminer le carbone du précurseur en le remplaçant par de l'azote, à une température pouvant être comprise entre 500 et 1200°C. Il est avantageux de chauffer progressivement la pièce de 100 à 950°C, par exemple, à raison d'1°C par minute puis de recuire pendant 1 heure à 950°C à pression atmosphérique ou sous vide, informations données à titre indicatif.

Les particules de poudre de polymère se transforment ainsi en particules de céramique denses, non poreuses à la suite d'un retrait de l'ordre de 20 à 25%, les pièces finales étant denses, exemptes de fissures et amorphes aux rayons X.

Sans que cette explication n'engage les demanderesses, la bonne résistance mécanique peut être attribuée à la formation d'interconnexions covalentes entre les particules de poudre de polymère formées au cours de la pyrolyse. On n'observe aucune fissure macroscopique et la microscopie électronique à balayage ne permet pas de détecter des pores supérieurs à 20 µm dans les céramiques monolithiques obtenues.

D'une manière générale, la porosité de l'article céramique monolithique final n'excède pas 25% et la plus grande partie de pore (plus de 50%) présente un diamètre de l'ordre de 100 à 500 nm.

Les articles précités peuvent être cristallisés par traitement thermique par exemple à une température de l'ordre de 1300 à 1700°C. Dans le cas de monolithes amorphes de SiC, on peut ainsi obtenir α-SiC ou β-SiC

3

ou un mélange des deux formes cristallines. De la même manière, à partir de $SI_3N_4$ amorphe on peut obtenir $\alpha$-$SI_3N_4$ ou $\beta$-$SI_3N_4$ ou un mélange des deux.

Les exemples suivants illustrent l'invention.

**EXEMPLE 1 :**

4 g de polysilazane NCP 200 (Société NICHIMEN CORPORATION, Japon), placés dans un tube en quartz, ont été chauffés jusqu'à 400°C à la vitesse de 5°C/min, et ce sous atmosphère d'argon. A 120°C, le polysilazane a fondu et est resté à l'état liquide jusqu'au début de la polymérisation thermique, c'est à dire vers 400°C ; le matériau s'est ainsi transformé en un polysilazane précéramique infusible légèrement soluble dans le toluène, le tétrahydrofurane et le n-hexane. Après 5 mn de cuisson à 400°C, le résidu est refroidi à température ambiante. La perte de poids a été de 3,5%.

**EXEMPLE 2 :**

42 g de polysilazane NCP 200 ont été chauffés dans un tube en quartz jusqu'à 400°C à la vitesse de 13°C/mn, sous argon. Le polysilazane a fondu à 120°C et est resté à l'état liquide jusqu'à la polymérisation thermique à 400°C. La cuisson à 400°C du polysilazane réticulé pendant 1 heure sous argon puis pendant 2 heures sous vide ($3.10^{-3}$ mbar) s'est traduite par l'évaporation des espèces de faible masse moléculaire et par la transformation du polysilazane en un matériau infusible et insoluble dans le toluène, le THF ou le n-hexane. Après refroidissement à température ambiante, on constate que la perte de poids a été de 8,3%. On a déterminé une densité de 1220 kg.$m^{-3}$ sur ce polysilazane réticulé à l'aide d'un picnomètre.

**EXEMPLE 3 :**

Le polysilazane réticulé et infusible fabriqué selon l'exemple 1 a été pastillé sous une presse uniaxiale. La pièce en polysilazane moulé (6 mm de diamètre et 10 mm de hauteur) a été ensuite pyrolysée avec une montée en température de 1°C/mn jusqu'à 950°C et a été maintenue à cette température pendant 1 heure. Ce traitement s'est traduit par une perte de masse de 29%. La pièce obtenue est exempte de fissures et présente une densité relative de 85%.

L'examen de la microstructure a montré que les particules du polymère de départ ont généré lors de la pyrolyse un réseau continu de carbonitrure de silicium par formation de fortes interconnections entre les particules. On n'a détecté aucune porosité à l'intérieur des larges particules de céramique obtenues.

**EXEMPLE 4 :**

Le polysilazane préparé selon l'exemple 2 est broyé puis passé sur tamis 140 $\mu$m. Les particules présentent des tailles inférieures à 60 $\mu$m et un diamètre moyen de 8 $\mu$m. Cette poudre de polymère est ensuite moulée par pressage isostatique à froid sous 640 MPa en un cylindre de 14 mm de hauteur et de 14 mm de diamètre. Sa densité à cru est de 1026 kg.$m^{-3}$, c'est à dire 84% de la densité maximale théorique. La pièce moulée présente une excellente tenue mécanique. On la pyrolyse dans les mêmes conditions que pour l'exemple 3 et l'on obtient ainsi une pièce monolithique exempte de fissures apparentes. Lors de la pyrolyse, le retrait linéaire a été de 25% et la perte de masse de 23%.

La pièce obtenue présente une densité de 1992 kg.$m^{-3}$, ce qui correspond à 87% de la densité théorique maximale de 2280 kg.$m^{-3}$ qui a été déterminée au picnomètre. La microstructure est constituée d'un réseau continu d'une phase amorphe de carbonitrure de silicium avec une porosité ouverte de 12% (porosité au mercure). Aucune autre phase n'a été détectée entre les particules de céramique.

**EXEMPLE 5 :**

En utilisant la technique décrite à l'exemple 4, on a pressé à froid et de manière isostatique un corps en polysilazane de dimension 22 X 14 X 69 mm sous 640 MPa et on l'a pyrolysé dans les conditions de l'exemple 3. La densité de l'échantillon monolithique pyrolysé, exempte de fissures apparentes était de 75% de la théorie. On l'a découpé en barreaux de façon à pouvoir mesurer ses propriétés mécaniques. La résistance en flexion 4 points est d'environ 150 MPa. Des valeurs maximales de 370 MPa ont été obtenues dans des cas isolés.

**EXEMPLE 6 :**

Comme décrit à l'Exemple 4, la poudre de polysilazane réticulé est pressée à froid et de façon isostatique sous 640 MPa en un cylindre de 14 mm de hauteur et de 14 mm de diamètre. On pyrolyse ensuite jusqu'à 950°C sous une atmosphère réactive d'ammoniac et l'on obtient ainsi un échantillon monolithique de $SI_3N_4$ pur et exempt de fissures. La perte de poids de la pièce à la pyrolyse est de 23%.

**EXEMPLES 7 à 10 :**

Le précurseur fusible est un polysilazane commercialisé par la Société ATOCHEM sous la marque déposée PYROFINE PV.[R] Sa densité est de 1 environ à température ambiante. Sa viscosité est d'environ 13 poises à 50°C et 0,2 poise à 150°C.

Ce précurseur est réticulé par chauffage jusqu'à 300°C (vitesse de montée en température de 5°C/h) puis maintien à cette température pendant 1 heure. Après refroidissement, le polymère réticulé est broyé sous atmosphère d'azote. La poudre obtenue a une densité de 1,13 et une surface spécifique de $10m^2/g$.

Le mélange poudre/précurseur liquide est réalisé par mélange des quantités choisies des deux produits et addition d'une quantité de toluène équivalente à la masse du mélange précité. Le toluène est évaporé à 80°C sous vide progressif et l'ensemble est maintenu à 80° sous 5 mbar pendant 1 h 30.

**EXEMPLE 7 :**

On réalise un mélange poudre/liquide comme décrit précédemment dans la proportion de 15% en poids de liquide et 85% en poids de poudre.

Ce mélange est comprimé à 150 MPa et l'on obtient ainsi une pièce moulée.

On place cette pièce dans un four et l'on procède à la pyrolyse sous balayage d'azote avec le programme de température suivant :

▶ 100°C/h jusqu'à 130°C

▶ 5°C/h de 130 à 300°C

▶ 50 °C/h de 300 à 1000°C

▶ palier de 2 H à 1000°C

On obtient ainsi une pièce en céramique noire sans fissure apparente et aux dimensions sensiblement homothétiques de la pièce avant pyrolyse. Le traitement thermique s'est traduit par un retrait volumique d'environ 60%.

La pièce en céramique présente une porosité totale de 25%.

**EXEMPLE 8 :**

On procède comme pour l'exemple 7 à la différence que :
– on utilise un mélange à 20% en poids de précurseur liquide et 80% en poids de poudre réticulée ;
– pendant le traitement thermique de la pièce, on arrête le balayage d'azote à partir de 225°C et l'on exerce à la place une pression d'azote de 10 bars. Lorsque la température atteint 300°C, on rétablit le balayage d'azote à pression atmosphérique.

On obtient une pièce en céramique noire sans fissure apparente et aux dimensions sensiblement homothétiques de la pièce avant pyrolyse.

Cette pièce présente une porosité totale de 21%.

**EXEMPLE 9 :**

On réalise un mélange comme décrit précédemment avec 5% en poids de précurseur liquide et 95% en poids de poudre réticulée.

Après formage sous pression comme précédemment décrit, on procède à un traitement thermique de la pièce moulée sous balayage d'azote à pression atmosphérique par le programme de température suivant :

▶ 100°C/h jusqu'à 130°C

▶ 5°C/h de 130 à 300°C

▶ palier de 1 H à 300°C

On obtient ainsi une pièce présentant suffisamment de consistance pour être manipulée et qui ne "colle" plus comme avant le traitement chimique.

On procède à une imprégnation de cette pièce par de la Pyrofine PV$^{(R)}$ pure à 150°C sous 150 bars pendant 2 heures.

On pyrolyse ensuite cette pièce imprégnée sous balayage d'azote par le programme de température suivant :

▶ 100°C/h jusqu'à 130°C

▶ 5°C/h de 130 à 300°C

▶ 50°C/h de 300 à 1000°C

▶ palier de 2 h à 1000°C

On obtient ainsi une pièce en céramique noire sans fissure apparente et aux dimensions sensiblement homothétiques de la pièce avant pyrolyse.

La pièce en céramique présente une porosité totale de 15%.

**EXEMPLE 10 (comparatif) :**

On coule environ 2 cm$^3$ de Pyrofine PV$^{(R)}$ dans un tube en quartz de $\varnothing \approx 1$ cm et on procède à une pyrolyse par le programme de température suivant :

▶ 100°C/h jusqu'à 130°C

▶ 5°C/h de 130 à 300°C

▶ 50°C/h de 300 à 1000°C

▶ palier de 2 h à 1000°C

On obtient ainsi une céramique noire fragile présentant d'évidents défauts à l'oeil nu et une porosité totale de 53%.

Cet exemple démontre à l'évidence l'intérêt de l'invention illustrée par les exemples précédents.

## Revendications

**1.** Procédé de préparation de matériaux céramiques non oxydes monolithiques, caractérisé en ce qu'il comprend les étapes suivantes :
1- Préparation d'une poudre (P) à partir d'un précurseur de céramique infusible (Pi) ;
2- Mise en forme de la poudre (P) ;
3- Pyrolyse de la pièce formée en 2 et obtention du matériau céramique monolithique.

**2.** Procédé selon la revendication 1, caractérisé en ce que la poudre est mise en forme dans la seconde étape en mélange avec un précurseur organométallique fusible (Po) liquide dans les conditions de cette mise en forme.

**3.** Procédé selon la revendication 2, caractérisé en ce que la pièce résultant de la mise en forme est soumise avant pyrolyse à des conditions permettant la réticulation du précurseur (Po).

**4.** Procédé selon l'une quelconque des revendications 1 à 3, caractérisé en ce que la pièce résultant de la mise en forme sous 2 est imprégnée ou réimprégnée avant pyrolyse au moyen d'un précurseur (Po).

**5.** Procédé selon l'une quelconque des revendications 1 à 4, caractérisé en ce que le précurseur infusible (Pi) résulte de la réticulation thermique, chimique ou physique d'un précurseur (Po).

**6.** Procédé selon l'une quelconque des revendications 1 à 5, caractérisé en ce que le précurseur infusible (Pi) est choisi parmi les précurseurs obtenus directement sous forme infusible lors de leur fabrication.

**7.** Procédé selon l'une quelconque des revendications 1 à 6, caractérisé en ce que le précurseur infusible (Pi) ou le précurseur fusible (Po) est choisi parmi les précurseurs contenant Al, B ou Si et C ou N ou leurs mélanges dans la chaîne polymérique.

**8.** Procédé selon la revendication 7, caractérisé en ce que le précurseur infusible (Pi) ou le précurseur fusible (Po) est choisi dans le groupe constitué par les polysilazanes, polysilylhydrazines, polysilanes et polycarbosilanes.

9. Procédé selon la revendication 5, caractérisé en ce que la réticulation du précurseur (Po) est réalisée par voie chimique, physique ou thermique à une température pouvant aller de la température ambiante jusqu'à 750°C.

10. Procédé selon l'une quelconque des revendications 1 à 9, caractérisé en ce que la poudre (P) présente une granulométrie comprise entre 0,1 et 500 $\mu$m.

11. Procédé selon la revendication 2, caractérisé en ce que la quantité de précurseur (Po) représente au maximum 25% du poids du mélange (Pi)+(Po).

12. Procédé selon la revendication 3, caractérisé en ce que la réticulation du précurseur (Po) est obtenue par chauffage à une température comprise entre environ 300°C et environ 750°C.

13. Procédé selon l'une quelconque des revendications 1 à 12, caractérisé en ce que la pyrolyse est effectuée à une température comprise entre 500 et 1200°C.

14. Article céramique monolithique amorphe aux rayons X caractérisé en ce que la porosité n'excède pas 25% et en ce que la plus grande partie des pores présente un diamètre de l'ordre de 100 à 500 nm.

15. Article selon la revendication 14, caractérisé en ce qu'il est constitué de SiC ou de $SI_3N_4$.

16. Article céramique monolithique cristallisé résultant du traitement entre 1300 et 1700°C d'un article selon l'une quelconque des revendications 14 ou 15.